# EUROPÄISCHE PATENTSCHRIFT

(11) **EP 3 972 025 B1**
(45) Veröffentlichungstag und Bekanntmachung des Hinweises auf die Patenterteilung: **31.05.2023**
(21) Anmeldenummer: 20196530.8
(22) Anmeldetag: 16.09.2020
(51) Int. Cl.: H01M 10/0525, H01M 50/109, H01M 50/216, H01M 50/502, H01M 50/503

(54) **ELEKTROCHEMISCHE ZELLE MIT KONTAKTFAHNE**
ELECTROCHEMICAL CELL WITH CONTACT LUG
CELLULE ÉLECTROCHIMIQUE POURVU DE LANGUETTE DE CONTACT

(43) Veröffentlichungstag der Anmeldung: 23.03.2022
(73) Patentinhaber: VARTA Microbattery GmbH, 73479 Ellwangen Jagst (DE)
(72) Erfinder: Nestle, Marc Oliver, 597719 Singapore (SG); Siddannavar, Sunil, 587119 Karanataka (IN)
(74) Vertreter: Ostertag & Partner Patentanwälte mbB

(56) Entgegenhaltungen:
- EP-A1- 3 667 761
- DE-A1-102013 001 371
- DE-B4-102013 001 371
- US-A1- 2008 089 011

## Beschreibung

Die vorliegende Erfindung betrifft eine elektrochemische Zelle mit einem zylindrischen Gehäuse und mit mindestens einer Kontaktfahne.

### ANWENDUNGSGEBIET UND STAND DER TECHNIK

Elektrochemische Zellen dienen der Speicherung von Energie. Sie umfassen eine positive und eine negative Elektrode, die durch einen Separator voneinander getrennt sind. In solchen Energiespeicherzellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab. Die andere Teilreaktion läuft bei vergleichsweise höherem Redoxpotential an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der Zelle. Dieser lonenstrom durchquert den Separator und wird durch einen ionenleitenden Elektrolyten gewährleistet.

In sekundären (wieder aufladbaren) elektrochemischen Energiespeicherzellen ist diese Entladereaktion reversibel, es besteht also die Möglichkeit, die bei der Entladung erfolgte Umwandlung chemischer Energie in elektrische Energie wieder umzukehren.

Besonders viele Anwendungsfelder gibt es für kleine Zellen wie Knopfzellen. Knopfzellen sind definitionsgemäß Zellen, deren Höhe kleiner als ihr Durchmesser ist. Sie weisen in der Regel ein zylindrisches Gehäuse auf, das aus zwei elektrisch voneinander isolierten metallischen Gehäuseteilen zusammengesetzt ist, von denen eines als positiver Pol und das andere als negativer Pol geschaltet ist. Das Gehäuse weist meist eine erste und eine zweite Stirnseite auf, die jeweils einen kreisrunden oder ovalen Umfang aufweisen und über einen ringförmigen Mantel miteinander verbunden sind.

Um Zellen wie Knopfzellen in elektronischen Geräten, beispielsweise auf Platinen, zu fixieren, werden häufig Kontaktfahnen benötigt. Die Kontaktfahnen diesen zum einen als mechanisches Befestigungsmittel, zum anderen aber auch als elektrische Leiter. Meist ist eine Kontaktfahne mit dem positiven Pol und eine zweite Kontaktfahne mit dem negativen Pol verbunden. Die Verbindung zum Gehäuse der Knopfzelle erfolgt insbesondere durch Verlötung oder durch Verschweißung.

Aus produktionstechnischen Gründen werden die Kontaktfahnen meist an den Stirnseiten von Knopfzellen angebracht. Durch ein Umbiegen einer der Kontaktfahnen um 90° kann diese Kontaktfahne auf die Seite der gegenüberliegenden Stirnseite geführt werden. Wenn sich die Kontaktfahnen in dergleichen Ebene befinden, ist ihre Fixierung auf einer Platine besonders einfach.

Zellen mit Kontaktfahnen sind beispielsweise aus der EP 3 667 761 A1, aus der US 2008/0089011 A1, der DE 10 2013 001 371 A1 und aus der US 2011/001618 A1 bekannt.

In den letzten Jahren wurden wiederaufladbare Knopfzellen entwickelt, die auf Lithium-Ionen-Technologie basieren, siehe beispielsweise WO 2010/089152 A1. Solche Knopfzellen benötigen verstärkt Sicherheitslösungen, da sie aufgrund ihrer hohen Energiedichte sowie ihrer leicht brennbaren Bestandteile im Schadensfall eine große Gefahr für Verbraucher darstellen können.

Eine bekannte Sicherheitslösung für Knopfzellen besteht darin, in eine ihrer Stirnseiten ein Berstkreuz einzubringen. Bildet sich innerhalb einer Zelle ein Überdruck und überschreitet dieser einen Druckschwellenwert, so öffnet sich das Gehäuse der Knopfzelle im Bereich des Berstkreuzes auf kontrollierte Weise und der Überdruck kann entweichen.

Ein solches Berstkreuz kann beim Aufschweißen einer Kontaktfahne auf eine mit einem Berstkreuz versehenen Stirnseite allerdings leicht blockiert werden.

Bei Zellen mit Kontaktfahnen kann weiterhin das Problem auftreten, dass sich die Kontaktfahnen bei Stößen, Schwingungen oder Vibrationen, denen sie ausgesetzt sind, von der jeweiligen Stirnseite, an der sie fixiert sind, lösen.

### AUFGABE UND LÖSUNG

Die Erfindung stellt sich demgegenüber die Aufgabe, eine elektrochemische Zelle bereitzustellen, die im Hinblick auf die genannten Probleme verbesserte Kontaktfahnen bereitstellt. Zellen mit den verbesserten Kontaktfahnen sollen widerstandsfähiger gegenüber den genannten mechanischen Belastungen sein und/oder sich durch eine verbesserte Sicherheit auszeichnen, insbesondere in Kombination mit Überdruckventilen wie dem genannten Berstkreuz.

Diese Aufgabe wird durch eine elektrochemische Zelle mit den Merkmalen des Anspruch 1 gelöst. Vorteilhafte Ausgestaltungen dieser zylindrischen Zelle sind Gegenstand der abhängigen Ansprüche.

Die erfindungsgemäße elektrochemische Zelle zeichnet sich zunächst durch die folgenden Merkmale aus:
a. Die Zelle umfasst ein einen Innenraum einschließendes zylindrisches Gehäuse mit einer ersten Stirnseite und einer zweiten Stirnseite, die über einen ringförmigen Mantel miteinander verbunden sind, und
b. im Innenraum des Gehäuses ist eine positive Elektrode und eine negative Elektrode angeordnet, und
c. die negative Elektrode ist unmittelbar oder über einen separaten Leiter elektrisch mit der ersten Stirnseite zur Ausbildung eines negativen Pols und die positive Elektrode ist unmittelbar oder über einen separaten Leiter elektrisch mit der zweiten Stirnseite zur Ausbildung eines positiven Pols verbunden, und
d. an der ersten oder der zweiten Stirnseite des Gehäuses ist eine Kontaktfahne fixiert,

Erfindungsgemäß zeichnet sich die elektrochemische Zelle im Hinblick auf die Kontaktfahne weiter stets durch die folgenden Merkmale aus:
e. die Kontaktfahne umfasst einen ersten endständigen Kontaktierungsabschnitt, in dem die Kontaktfahne an der Stirnseite fixiert ist, und
f. die Kontaktfahne umfasst einen zweiten endständigen Kontaktierungsabschnitt zur Kontaktierung der elektrochemischen Zelle mit einem externen elektrischen Leiter, und
g. die Kontaktfahne umfasstzwischen dem ersten Kontaktierungsabschnitt und dem zweiten Kontaktierungsabschnitt einen zum freien Schwingen befähigten Dämpfungsabschnitt, und
h. der erste Kontaktierungsabschnitt und der Dämpfungsabschnitt erstrecken sich in einer Ebene parallel zur Ebene der Stirnseite, an der die Kontaktfahne fixiert ist, und der zweite Kontaktierungsabschnitt erstreckt sich vorzugsweise in einem Winkel zu dieser Ebene.

Durch die Ausgestaltungder Kontaktfahne mit einem ersten endständigen Kontaktierungsabschnitt zur Fixierung der Kontaktfahne an der Stirnseite und einem zweiten endständigen Kontaktierungsabschnitt für eine Kontaktierung mit einem externen elektrischen Leiter sowie insbesondere dem dazwischenliegenden Dämpfungsabschnitt wird bei der erfindungsgemäßen Zelle eine erhebliche Verbesserung im Hinblick auf eine Stoß- und Vibrationsempfindlichkeitder elektrochemischen Zelle erreicht. Insbesondere können durch den Dämpfungsabschnitt im mittleren Bereich der Kontaktfahne Stöße, Schwingungen oder Vibrationen, denen die Kontaktfahne ausgesetzt ist, aufgefangen und abgeschwächt werden, so dass sich diese Stöße oder Schwingungen nicht in ihrem vollen Ausmaß auf die Kontaktierungsabschnitte und insbesondere auf den ersten Kontaktierungsabschnitt auswirken, so dass die Kontaktierungsabschnitte und insbesondere der erste Kontaktierungsabschnitt vor Erschütterungen weitestgehend geschützt werden.

Die Fixierung einer Kontaktfahne über den ersten Kontaktierungsabschnitt erfolgt üblicherweise durch eine Verschweißung, wobei hier beispielsweise ein Laserschweißen und mit besonderem Vorteil ein Widerstandsschweißen eingesetzt werden können. Hierfür können mehrere Schweißpunkte in dem ersten Kontaktierungsabschnitt vorgesehen sein, beispielsweise zwei oder vier oder sechs Schweißpunkte. Bei herkömmlichen elektrochemischen Zellen kann das Problem auftreten, dass durch auf die Zelle wirkende Stöße, Schwingungen oder Vibrationen sich ein oder mehrere dieser Schweißpunkte lösen, so dass es zu einer Lockerung oder sogar zu einer Ablösung der Kontaktfahne von der Stirnseite kommen kann. Dieses Problem wird bei der erfindungsgemäßen elektrochemischen Zelle dadurch reduziert, dass Stöße, Schwingungen oder Vibrationen, die auf die Kontaktfahne wirken, durch den Dämpfungsabschnitt, der sich zwischen den endständigen Kontaktierungsabschnitten befindet, aufgefangen und abgeschwächt werden.

Die beschriebene Kontaktfahne der erfindungsgemäßen Zelle kann eine herkömmliche Kontaktfahne ersetzen, die lediglich aus einem flächigen Kontaktierungsabschnitt (erster Kontaktierungsabschnitt), in dem die Kontaktfahne an einer Stirnseite der Zelle fixiert ist, sowie einer Kontaktspitze, über welche die elektrochemische Zelle mit einem externen elektrischen Leiter kontaktiert werden kann, besteht. Diese Kontaktspitze ist üblicherweise als schmaler Fortsatz direkt an dem flächigen Kontaktierungsabschnitt ausgebildet und kann abgewinkelt sein, so dass an dieser Kontaktspitze ein externer elektrischer Leiter beispielsweise angelötet oder angeklemmt werden kann. Ein Beispiel für eine Kontaktfahne mit einer nicht abgewinkelten Kontaktspitze findet sich in Fig. 1 der EP 3 667 761 A1 (Bezugszeichen 106).

Durch das Abfangen von Stößen, Schwingungen oder Vibrationen mittels des Dämpfungsabschnitts kann auch eine Verbindung zwischen dem zweiten Kontaktierungsabschnitt und einem externen elektrischen Leiter geschützt werden. So können beispielsweise Ermüdungserscheinungen oder Brüche und/oder Risse in einer Lötstelle oder in einer Klemmstelle zwischen dem zweiten Kontaktierungsabschnitt und dem externen elektrischen Leiter vermieden werden.

Gegebenenfalls kann der Dämpfungsabschnitt der Kontaktfahne gemäß der Erfindung auch elektromagnetische Wellen ableiten und/oder dämpfen, die gegebenenfalls schädigend auf die erfindungsgemäße Zelle wirken könnten.

Wie oben ausgeführt, erstreckt sich der zweite Kontaktierungsabschnitt in bevorzugten Ausführungsformen in einem Winkel zu der Ebene der Stirnseite, an der die Kontaktfahne fixiert ist. Oder in anderen Worten, der zweite Kontaktierungsabschnitt ist bevorzugt vom ersten Kontaktierungsabschnitt sowie dem Dämpfungsabschnitt abgewinkelt. Der Winkel beträgt besonders bevorzugt 90°. In diesen bevorzugten Ausführungsformen ist die Grenze zwischen dem zweiten Kontaktierungsabschnitt und dem Dämpfungsabschnitt bevorzugt durch einen Biegeabschnitt gebildet, in dem die Kontaktfahne umgebogen ist. Der nicht parallel zur Stirnseite ausgerichtete Teil der Kontaktfahne ist in diesem Fall der zweite Kontaktierungsabschnitt.

Die erste und die zweite Stirnseite des Gehäuses einer erfindungsgemäßen Zelle weisen bevorzugt jeweils einen kreisrunden oder ovalen Umfang auf und sind über einen ringförmigen Mantel miteinander verbunden.

Bei der Herstellung der erfindungsgemäßen zylindrischen Zelle ist die Kontaktfahne mit dem ersten Kontaktierungsabschnitt und dem zweiten Kontaktierungsabschnitt und dem dazwischen angeordneten Dämpfungsabschnitt bevorzugt zunächst als ein flächiges Bauteil, beispielsweise ein Blech-Stanzteil, ausgebildet, dessen Abschnitte alle in einer Ebene liegen. In dieser Form kann die Kontaktfahne über den ersten Kontaktierungsabschnitt auf der Stirnseite der Zelle fixiert werden. Erst später kann eine Umbiegung bzw. Abwinkelung des zweiten Kontaktierungsabschnitts erfolgen, um den zweiten Kontaktierungsabschnitt mit einem externen elektrischen Leiter leichter verbinden zu können.

Alternativ kann die Umbiegung bzw. Abwinkelung auch bereits vor dem Fixieren der Kontaktfahne auf der Stirnseite erfolgen.

Die Stirnseite, an die die beschriebene Kontaktfahne fixiert ist, ist vorzugsweise diejenige Stirnseite der elektrochemischen zylindrischen Zelle, die den negativen Pol der Zelle bildet.

In einer besonders bevorzugten Ausgestaltung der erfindungsgemäßen zylindrischen Zelle zeichnet sich die Zelle durch das unmittelbar folgende zusätzliche Merkmal aus:
a. Der Dämpfungsabschnitt ist nicht unmittelbar mit der Stirnseite, an der die Kontaktfahne fixiert ist, verbunden.

Gemäß dem unmittelbar vorgenannten Merkmal a. ist der Dämpfungsabschnitt nur indirekt mit der Stirnseite verbunden. Der Dämpfungsabschnitt bildet dabei gewissermaßen einen freischwingenden Fortsatz des ersten Kontaktierungsabschnitts, wobei dieser freischwingende Fortsatz in den zweiten, endständigen Kontaktierungsabschnitt übergeht, über den die Kontaktierung der elektrochemischen Zelle zu einem externen elektrischen Leiter erfolgen kann.

In besonders bevorzugter Weise zeichnet sich der Dämpfungsabschnitt der zylindrischen Zelle durch mindestens eines der unmittelbar folgenden Merkmale a. bis c. aus:
a. Der Dämpfungsabschnitt ist bandförmig ausgestaltet.
b. Der Dämpfungsabschnitt umfasst zumindest einen bandförmigen Abschnitt mit im Wesentlichen konstanter Breite.
c. Die Kontaktfahne umfasst einen Übergang vom ersten Kontaktierungsabschnitt zum Dämpfungsabschnitt, in dem die Breite der Kontaktfahne abnimmt, so dass der Querschnitt der Kontaktfahne um mindestens 25 %, bevorzugt um mindestens 50 %, abnimmt.

Vorzugsweise sind die beiden unmittelbar vorgenannten Merkmale a. und b., besonders bevorzugt die Merkmale a. bis c., in Kombination miteinander verwirklicht.

Besonders bevorzugt weist der bandförmige Abschnitt mit im Wesentlichen konstanter Breite oder der Dämpfungsabschnitt, insbesondere der bandförmige Dämpfungsabschnitt, eine Länge auf, welche die maximale Länge des zweiten Kontaktierungsabschnitts überschreitet, bevorzugt mindestens um den Faktor 2, besonders bevorzugt mindestens um den Faktor 4.

Es ist weiterhin bevorzugt, dass der bandförmige Abschnitt mit im Wesentlichen konstanter Breite oder der Dämpfungsabschnitt, insbesondere der bandförmige Dämpfungsabschnitt, die maximale Länge des ersten Kontaktierungsabschnitts überschreitet, bevorzugt mindestens um den Faktor 1,1, besonders bevorzugt mindestens um den Faktor 2, insbesondere um den Faktor3.

Die Anwesenheit des Übergangs vom ersten Kontaktierungsabschnitt zum Dämpfungsabschnitt schließt nicht aus, dass es innerhalb des Dämpfungsbereichs zumindest lokal wieder zu einer Zunahme der Breite und damit des Querschnitts der Kontaktfahne kommen kann.

Die Änderung der Breite der Kontaktfahne in dem Übergang kann stufenweise oder kontinuierlich ausgestaltet sein. Durch diese Ausgestaltung des Dämpfungsabschnitts können Schwingungen, Stöße oder Vibrationen, die ausgehend von dem zweiten Kontaktierungsabschnitt auf die Kontaktfahne wirken, in besonders effektiver Weise aufgefangen und abgeschwächt werden, bevor sie den ersten Kontaktierungsabschnitt erreichen.

In einer ganz besonders bevorzugten Ausgestaltung zeichnet sich der Dämpfungsabschnitt durch das folgende Merkmal aus:
a. Der Dämpfungsabschnitt weist einen gebogenen Verlauf, insbesondere einen kreisförmigen Verlauf, auf.

Der gebogene Verlauf des Dämpfungsabschnitts hat zunächst den besonderen Vorteil, dass hiermit eine verhältnismäßig große Länge des Dämpfungsabschnitts erreicht werden kann, wobei die begrenzte Fläche der Stirnseite der zylindrischen Zelle optimal ausgenutzt werden kann. Durch die damit mögliche Verlängerung des Dämpfungsabschnitts können Stöße, Schwingungen oder Vibrationen noch besser abgefangen werden.

Der Dämpfungsabschnitt innerhalb der Kontaktfahne kann dabei gewissermaßen bahn- oder streifenförmig und vorzugsweise gebogen sein. Der bogenförmige Verlauf kann dabei vorzugsweise einem teilkreisförmigen Verlauf folgen. Beispielsweise kann der Dämpfungsabschnitt etwa eine 3/4-kreisförmige Form aufweisen.

Die Ausgestaltung des Dämpfungsabschnitts mit einem gebogenen Verlauf bietet darüber hinaus noch einen weiteren besonderen Vorteil. Insbesondere kann durch den gebogenen Verlauf ein zentraler Bereich der Stirnseite von der Kontaktfahne freigehalten werden, so dass dieser zentrale Bereich für andere Zwecke zur Verfügung steht.

In einer ganz besonders bevorzugten Ausgestaltung zeichnet sich die erfindungsgemäße Zelle durch mindestens eines der unmittelbar folgenden Merkmale a. bis c. aus:
a. Die Zelle weist ein Sicherheitsventil auf.
b. Die Zelle weist als Sicherheitsventil ein Berstkreuz auf.
c. Der Dämpfungsabschnitt weist einen gebogenen Verlauf um das Sicherheitsventil herum auf.

Vorzugsweise sind die beiden unmittelbar vorgenannten Merkmale a. und c., besonders bevorzugt die unmittelbar vorgenannten Merkmale a. bis c., in Kombination miteinander verwirklicht.

Eine bekannte Sicherheitslösung für Zellen, insbesondere für Knopfzellen, besteht darin, in eine der Stirnseiten ein Sicherheitsventil, insbesondere in Form eines sogenannten Berstkreuzes, einzubringen. Bildet sich innerhalb der Zelle ein Überdruck und überschreitet dieser Druck einen bestimmten Schwellenwert, so kann sich das Sicherheitsventil, beispielsweise das Berstkreuz, das eine Sollrissstelle bildet, öffnen, so dass der Überdruck entweichen kann.

In besonders bevorzugten Ausführungsformen der Erfindung wird der erwähnte freigehaltene zentrale Bereich der Stirnseite für Sicherheitszwecke genutzt, insbesondere wird dort das Sicherheitsventil positioniert. Das Sicherheitsventil und insbesondere das Berstkreuz ist mit besonderem Vorteil in einem Bereich der Stirnseite, insbesondere einem zentralen Bereich, positioniert, die durch den gebogenen Verlauf der Kontaktfahne freigelassen ist. Hierdurch wird erreicht, dass das Berstkreuz oder gegebenenfalls ein anders ausgestaltetes Sicherheitsventil nicht durch die Kontaktfahne blockiert wird.

Vorzugsweise zeichnet sich die Kontaktfahne der erfindungsgemäßen zylindrischen Zelle durch das unmittelbar folgende zusätzliche Merkmal aus:
a. Die Kontaktfahne erstreckt sich über den Rand der Stirnseite, an der sie fixiert ist.

Wie oben ausgeführt, weisen die erste und die zweite Stirnseite des Gehäuses einer erfindungsgemäßen Zelle bevorzugt jeweils einen kreisrunden oder ovalen Umfang auf und sind über einen ringförmigen Mantel miteinander verbunden.

Wenn der zweite Kontaktierungsabschnitt und der Dämpfungsabschnitt in der gleichen Ebene liegen, so ragt die Kontaktfahne bevorzugt über den Rand der Stirnseite, an der sie fixiert ist, und bevorzugt auch über den Umfang des Mantels. In diesem Fall ist der nicht auf der Stirnseite liegende Teil der Kontaktfahne der zweite Kontaktierungsabschnitt. Dadurch, dass der zweite Kontaktierungsabschnitt nicht auf der Stirnseite aufliegt, sondern entweder abgewinkelt ist oder über den Rand der Stirnseite ragt, an der sie fixiert ist, ist er in besonders praktikabler Weise für die Kontaktierung zugänglich, so dass die Anbindung an einen externen elektrischen Leiter in besonders einfacher Weise möglich ist. Beispielsweise kann in an sich bekannter Weise der zweite Kontaktierungsabschnitt mit einem elektrischen Leiter, beispielsweise einem Draht, durch Löten oder Klemmen verbunden werden, um so den Kontakt zu dem jeweiligen Pol der erfindungsgemäßen Zelle herzustellen.

In besonders bevorzugter Weise zeichnet sich die erfindungsgemäße Zelle durch die unmittelbar folgenden zusätzlichen Merkmale a. und b. aus:
a. Die Zelle umfasst die an der ersten oder der zweiten Stirnseite des Gehäuses fixierte Kontaktfahne als erste Kontaktfahne.
b. Die Zelle umfasst eine zweite Kontaktfahne an der Stirnseite des Gehäuses, die der Stirnseite mit der daran fixierten ersten Kontaktfahne gegenüberliegt.

Neben der bereits ausführlich beschriebenen ersten Kontaktfahne kann die Zelle auch noch eine weitere Kontaktfahne aufweisen, die an der gegenüberliegenden Stirnseite fixiert ist. Wie eingangs erwähnt, können Kontaktfahnen in bevorzugten Ausführungsformen durch ein Umbiegen um 90° auf die Seite der gegenüberliegenden Stirnseite geführt werden. Vorzugsweise zeichnet sich die erfindungsgemäße Zelle entsprechend durch das unmittelbar folgende zusätzliche Merkmal a. aus:
a. Die zweite Kontaktfahne erstreckt sich übereinen abgewinkelten Kontaktfahnenbereich in die Ebene der gegenüberliegenden Stirnseite.

Mittels des abgewinkelten Kontaktfahnenbereichs kann die Kontaktierung der beiden Pole der zylindrischen Zelle damit in besonders praktikabler Weise von einer Seite der Zelle her erfolgen. Diese Ausgestaltung der erfindungsgemäßen zylindrischen Zelle erlaubt damit beispielsweise in einer besonders bevorzugten Ausgestaltung eine einfache Fixierung der Zelle an einer Platine.

Die zweite Kontaktfahne kann beispielsweise ausgestaltet sein wie die Kontaktfahne mit dem Bezugszeichen 107 in Fig. 2 der bereits erwähnten EP 3 667 761 A1.

Insbesondere bei der ersten Kontaktfahne handelt es sich bei herkömmlichen zylindrischen Zellen um ein verhältnismäßig kleines Bauteil, das im Prinzip nur aus einem flächigen Kontaktierungsabschnitt, in dem die Kontaktfahne an der Stirnseite der Zelle befestigt wird, und einem zweiten Kontaktierungsabschnitt in Form einer Kontaktspitze besteht. Aufgrund dieser kleinen Größe des Bauteils kann es zu Schwierigkeiten im Produktionsprozess der Zelle kommen, da dieses kleine Bauteil bei der Fixierung der Kontaktfahne an der Stirnseite schwer zu handhaben ist. Die Kontaktfahne mit dem Dämpfungsabschnitt gemäß der Erfindung hat demgegenüber den besonderen Vorteil, dass hierdurch die Angriffsmöglichkeiten an der Kontaktfahne im Herstellungsprozess der zylindrischen Zelle, insbesondere bei einer automatisierten Fertigung, wesentlich verbessert und vereinfacht werden, so dass die erfindungsgemäße Zelle auch im Hinblick auf deren Produktion und die Produktionskosten besonders vorteilhaft ist. Die erfindungsgemäße Zelle ist daher in besonderer Weise für eine automatisierte Fertigung geeignet.

In besonders bevorzugter Weise zeichnet sich die Kontaktfahne oder die Kontaktfahnen der erfindungsgemäßen zylindrischen Zelle durch mindestens eines der unmittelbar folgenden zusätzlichen Merkmale a. und b. aus:
a. Die Kontaktfahne oder die Kontaktfahnen sind Blechteile.
b. Die Kontaktfahne oder die Kontaktfahnen sind Stanzteile.

Blechteile, insbesondere in Form von Stanzteilen, sehr einfach und kostengünstig herstellbar und erhöhen auch nicht maßgeblich das Gewicht der resultierenden zylindrischen Zellen.

Vorzugsweise handelt es sich bei den Kontaktfahnen oder der Kontaktfahne um sehr dünne Blechteile. In besonders bevorzugter Weise können die Kontaktfahne oder die Kontaktfahnen der erfindungsgemäßen zylindrischen Zelle im Hinblick auf die Dicke der Kontaktfahne(n) das unmittelbar folgende zusätzliche Merkmal aufweisen:
a. Die Kontaktfahne oder die Kontaktfahnen weisen eine Dicke in einem Bereich von 0,05 mm bis 2,5 mm, vorzugsweise von 0,25 bis 2,5 mm, auf.

Eine Dicke der Kontaktfahne in diesem genannten Bereich gewährleistet zum einen eine ausreichende Stabilität der Kontaktfahne(n). Auf der anderen Seite gewährleistet diese Dicke der Kontaktfahne(n) eine ausreichende Schwingungsfähigkeit der ersten Kontaktfahne im Dämpfungsabschnitt der Kontaktfahne, so dass dadurch die auf die erste Kontaktfahne wirkenden Stöße, Schwingungen oder Vibrationen besonders gut abgefangen und gedämpft werden können.

Als Material für die Kontaktfahnen kommen vor allem metallische Materialien infrage. In besonders bevorzugter Weise kann bei der erfindungsgemäßen zylindrischen Zelle das unmittelbar folgende zusätzliche Merkmal im Hinblick auf die verwendeten Materialien für die Kontaktfahne oder für die Kontaktfahnen vorgesehen sein:
a. Die Kontaktfahne oder die Kontaktfahnen bestehen aus Stahl, insbesondere aus Edelstahl.

Als Stahl kann beispielsweise ein sogenannter CRCA-Stahl (CRCA - *cold rolled close annealed*) verwendet werden.

Alternativ kann/können die Kontaktfahne oderdie Kontaktfahnen auch aus Nickel oder vernickelten Metallen oder Nickellegierungen bestehen.

In einer besonders bevorzugten Ausgestaltung der elektrochemischen zylindrischen Zelle handelt es sich bei der zylindrischen Zelle um eine Lithium-Ionen-Zelle. Lithium-Ionen-Zellen zeichnen sich durch eine besonders hohe Energiedichte aus und sind daher für verschiedene Anwendungen mit besonderem Vorteil einsetzbar. Im Zusammenhang mit Lithium-Ionen-Zellen bietet die erfindungsgemäße Ausgestaltung der ersten Kontaktfahne darüber hinaus den Vorteil, dass auch dem Sicherheitsaspekt von Lithium-Ionen-Zellen in besonderer Weise Rechnung getragen wird. Insbesondere bietet die erste Kontaktfahne gemäß der Erfindung die Möglichkeit, den Dämpfungsabschnitt insbesondere durch eine gebogene Form so auszugestalten, dass ein Sicherheitsventil, insbesondere ein Berstkreuz, nicht blockiert wird.

In besonders bevorzugten Ausgestaltungen der erfindungsgemäßen zylindrischen Zelle zeichnet sich die Zelle durch mindestens eines der unmittelbar folgenden zusätzlichen Merkmale aus:
a. Die Zelle ist eine Knopfzelle.
b. Die Zelle weist einen Durchmesser in einem Bereich von 5 mm bis 25 mm auf.
c. Die Zelle weist eine Höhe in einem Bereich von 1,5 mm bis 15 mm, vorzugsweise von 3 mm bis 15 mm auf.

Vorzugsweise sind dabei die unmittelbar vorstehenden Merkmale a. und b. oder a. und c. und besonders bevorzugt die unmittelbar vorstehenden Merkmale a., b. und c. gemeinsam miteinander verwirklicht.

Das Gehäuse der erfindungsgemäßen Zelle ist vorzugsweise aus zwei metallischen Gehäuseteilen gefertigt, die bevorzugt becherförmig ausgebildet sind. Neben bevorzugt kreisrunden Böden weisen sie bevorzugt jeweils einen hohlzylindrischen Mantel auf. Die Außenseiten der Böden bilden bevorzugt die erwähnten Stirnseiten.

Zwischen den zwei metallischen Gehäuseteilen ist vorzugsweise eine ringförmige Dichtung aus Kunststoff angeordnet, welche die Gehäuseteile elektrisch gegeneinander isoliert. Darüber hinaus gewährleistet die Dichtung einen flüssigkeitsdichten Verschluss der Zellen.

Die Gehäuseteile können beispielsweise aus vernickeltem Stahl oder Blech bestehen. Weiterhin kommt als metallischer Werkstoff auch Trimetall in Frage, beispielsweise mit der Abfolge Nickel, Stahl (oder Edelstahl) und Kupfer. Es ist auch denkbar, dass ein Gehäuseteil aus Aluminium oder einer Aluminiumlegierung gebildet ist während das andere aus Stahl oder aus Trimetall besteht.

Bevorzugt sind die Elektroden der Zelle bandförmig ausgebildet und Bestandteil eines Wickel-Verbundkörpers, der in dem Innenraum des Gehäuses angeordnet ist. Dieser ist bevorzugt aus mindestens zwei spiralförmig um eine Wickelachse herum gewickelten Elektrodenbändern (der positiven und der negativen Elektrode) und mindestens einem um die Wickelachse herum spiralförmig gewickelten Separatorband gebildet. Bevorzugt ist der Wickel-Verbundkörper ebenfalls zylindrisch ausgebildet und weist entsprechend bevorzugt gleichfalls zwei kreisförmige Stirnseiten auf.

Die Stirnseiten des Wickel-Verbundkörpers werden bevorzugt von den Längsrändern des mindestens einen Separatorbands gebildet und weisen in Richtung der kreisrunden und zueinander parallelen Gehäuseböden, so dass die Wickelachse senkrecht oderzumindest im Wesentlichen senkrecht zu den Gehäuseböden ausgerichtet ist. Bevorzugt fallen die Wickelachse und die Zylinderachse zusammen. Beispiele solcher Wickel-Verbundkörper sind unter anderem in der WO 2010/089152 A1 beschrieben.

Sowohl die positive Elektrode als auch die negative Elektrode umfassen bevorzugt einen bandförmigen, mit Elektrodenmaterial bedeckten metallischen Stromkollektor. Die Stromkollektoren dienen dazu, das Elektrodenmaterial möglichst großflächig elektrisch zu kontaktieren. Sie bestehen üblicherweise aus bandförmigen, flächigen Metallsubstraten, beispielsweise aus Metallfolien oder aus einem Metallschaum oder aus einem metallisierten Vlies.

Zur elektrischen Kontaktierung der Elektroden an die Gehäuseteile können diese Stromkollektoren unmittelbar an die Gehäuseteile, bevorzugt an die Innenseiten der Böden der Gehäuseteile, geschweißt sein. Alternativ können die Stromkollektoren auch an separate elektrische Leiter geschweißt sein, der ihrerseits elektrisch mit den Gehäuseteilen verbunden sind.

Als Elektrodenmaterialien kommen für die Elektroden der erfindungsgemäßen Zelle insbesondere sämtliche Materialien in Frage, die Lithium-Ionen aufnehmen und wieder abgeben können. Für die negative Elektrode von sekundärer Lithium-Ionen-Systemen eignen sich insbesondere Materialien auf Kohlenstoffbasis wie graphitischer Kohlenstoff oder zur Interkalation von Lithium befähigte nichtgraphitische Kohlenstoffmaterialien. Für die positive Elektrode sekundärer Lithium-Ionen-Systeme kommen etwa Lithium-Metalloxid-Verbindungen und Lithium-Metallphosphat-Verbindungen wie LiCoO₂ und LiFePO₄ in Frage.

Weiterhin können die Elektroden Elektrodenbinder und Leitmittel enthalten. Die Elektrodenbinder gewährleisten die mechanische Stabilität der Elektroden und sorgen für die Kontaktierung der Partikel aus elektrochemisch aktivem Material untereinander sowie zum Stromkollektor. Leitmittel wie Ruß dienen dazu, die elektrische Leitfähigkeit der Elektroden zu erhöhen.

Die Elektroden sind bevorzugt mit einem geeigneten Elektrolyten getränkt.

Die Erfindung umfasst ferner ein Verfahren zur Herstellung der beschriebenen, erfindungsgemäßen elektrochemischen Zellen. Im Prinzip unterscheidet sich dieses Herstellungsverfahren von herkömmlichen Verfahren zur Herstellung von zylindrischen Zellen vor allem durch die Verwendung der beschriebenen ersten Kontaktfahne, die neben einem ersten endständigen Kontaktierungsabschnitt und einem zweiten endständigen Kontaktierungsabschnitt den dazwischenliegenden Dämpfungsabschnitt aufweist.

Bei dem Herstellungsverfahren werden bevorzugt zunächst in an sich bekannter Weise die entsprechend vorbereiteten Elektroden, beispielsweise in Form eines Wickel-Verbundkörpers, in das Innere des Gehäuses derzylindrischen Zelle eingebracht, das Gehäuse geschlossen und gegebenenfalls abgedichtet und die Elektroden mit den Stirnseiten bzw. Polen der zylindrischen Zelle kontaktiert. An zumindest einer der Stirnseiten der zylindrischen Zelle wird die Kontaktfahne mit dem Dämpfungsabschnitt (erste Kontaktfahne) fixiert, indem die Fixierung der Kontaktfahne an der Stirnseite des Gehäuses ausschließlich in dem ersten Kontaktierungsabschnitt erfolgt. Hierfür können beispielsweise mehrere Schweißpunkte vorgesehen sein, die durch eine Verschweißung mittels Widerstandsschweißen oder Laserschweißen hergestellt werden. Der sich an den ersten Kontaktierungsabschnitt anschließende Dämpfungsabschnitt der Kontaktfahne wird nicht direkt mit der Stirnseite verbunden und ist somit zum freien Schwingen befähigt. Am Ende dieses Dämpfungsabschnitts befindet sich der zweite Kontaktierungsabschnitt, der für eine Kontaktierung der Kontaktfahne und damit des jeweiligen Pols der Zelle mit einem externen elektrischen Leiter in an sich bekannter Weise vorgesehen ist.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Zeichnungen zeigen:
- Fig. 1: Schrägansicht auf eine Knopfzelle aus dem Stand der Technik mit einer ersten Kontaktfahne und einer zweiten Kontaktfahne;
- Fig. 2: schräge Aufsicht auf eine an einer Stirnseite einer zylindrischen Zelle fixierten Kontaktfahne (Ausschnitt) aus dem Stand der Technik;
- Fig. 3: Aufsicht auf eine an einer Stirnseite einer zylindrischen Zelle fixierte Kontaktfahne in einer bevorzugten Ausführungsform gemäß der Erfindung;
- Fig. 4: Aufsicht auf eine an einer Stirnseite einer zylindrischen Zelle fixierte Kontaktfahne gemäß einer weiteren bevorzugten Ausführungsform der Erfindung; und
- Fig. 5: schräge Aufsicht auf eine an einer Stirnseite einer zylindrischen Zelle fixierte weitere bevorzugte Ausführungsform einer Kontaktfahne (Ausschnitt) gemäß der Erfindung.

### DETAILLIERTE BESCHREIBUNG DER AUSFÜHRUNGSBEISPIELE

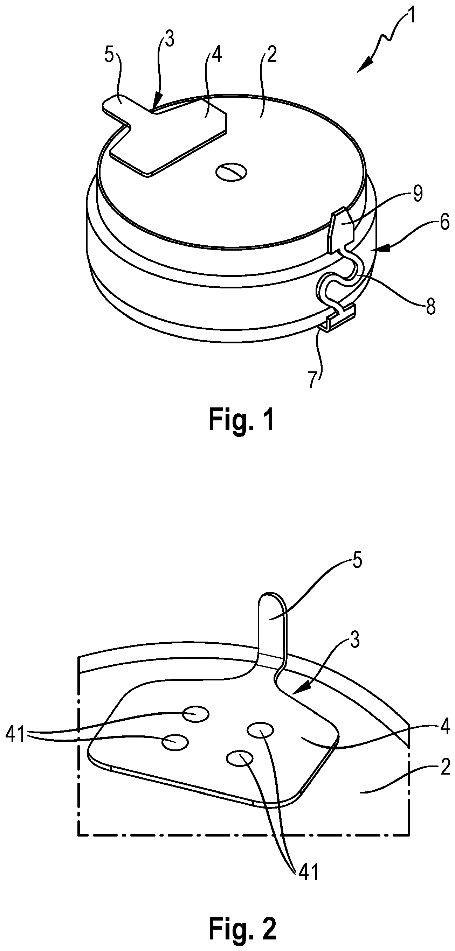

**Fig. 1** zeigt in schräger Aufsicht eine Knopfzelle 1 aus dem Stand der Technik. Die hier sichtbare obere Stirnseite 2 bildet den negativen Pol der Knopfzelle 1 und die untenliegende Stirnseite (nicht sichtbar) bildet den positiven Pol der Knopfzelle 1. An der Stirnseite 2 ist eine Kontaktfahne 3 fixiert, die sich in einen flächigen ersten Kontaktierungsabschnitt 4 und einen zweiten Kontaktierungsabschnitt 5 in Form einer Kontaktspitze untergliedert. Die Kontaktfahne ist in dem ersten Kontaktierungsabschnitt 4 ist an die Stirnseite 2 der Knopfzelle 1 fixiert. Über den zweiten Kontaktierungsabschnitt 5 erfolgt die Anbindung an einen externen elektrischen Leiter. Unter einem externen elektrischen Leiterwird vorliegend ein elektrischer Leiterverstanden, überden die Zelle beispielsweise mit einer Platine oder Ähnlichem direkt oder indirekt verbunden wird. Die Knopfzelle 1 weist darüber hinaus eine weitere Kontaktfahne 6 auf. Die weitere Kontaktfahne 6 untergliedert sich in einen ersten Kontaktierungsabschnitt 7, in dem die Kontaktfahne 6 auf der untenliegenden Stirnseite fixiert ist, einen abgewinkelten Kontaktfahnenbereich 8 und einen weiteren Kontaktierungsabschnitt 9, in dem die Kontaktierung mit einem externen elektrischen Leiter im Bereich der gegenüberliegenden Stirnseite 2 erfolgen kann. Eine derartige Knopfzelle ist beispielsweise aus der EP 3 667 761 A1 bekannt.

**Fig. 2** zeigt eine ebenfalls aus dem Stand der Technik bekannte Kontaktfahne 3, die im Prinzip wie die Kontaktfahne 3 in Fig. 1 aufgebaut ist. Der erste Kontaktierungsabschnitt 4 der Kontaktfahne 3 ist über vier einzelne Schweißpunkte 41 an der Stirnseite 2 der Knopfzelle fixiert. Der zweite Kontaktierungsabschnitt 5 befindet sich in dieser Form der Kontaktfahne 3 in einer abgewinkelten Position zur Ebene der Stirnseite 2 und damit gleichzeitig zur Ebene des ersten Kontaktierungsabschnitts 4, so dass derzweite Kontaktierungsabschnitts gut für eine Kontaktierung mit einem externen elektrischen Leiter zugänglich ist.

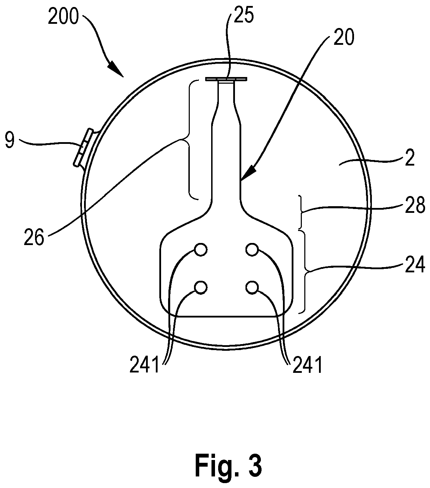

Die in den Fig. 3 bis 5 gezeigten Ausgestaltungen einer Kontaktfahne gemäß der Erfindung lösen durch den vorgesehenen jeweiligen Dämpfungsabschnitt innerhalb der Kontaktfahne das Problem der besonderen Stoß- und Vibrationsanfälligkeit einer Kontaktfahne 3 aus dem Stand der Technik.

**Fig. 3** zeigt eine, besonders bevorzugte Ausführungsform einer Kontaktfahne 20 gemäß der Erfindung, die sich auf der Stirnseite 2 einer Knopfzelle 200 befindet. Die Kontaktfahne 20 umfasst einen ersten Kontaktierungsabschnitt 24 mit einzelnen Schweißpunkten 241, welche die Kontaktfahne 20 an der Stirnseite 2 der Knopfzelle 200 fixieren. Weiterhin ist ein zweiter, endständiger Kontaktierungsabschnitt 25 zur Kontaktierung der zylindrischen Zelle 200 mit einem externen elektrischen Leiter vorgesehen. Zwischen dem ersten Kontaktierungsabschnitt 24 und dem zweiten Kontaktierungsabschnitt 25 ist ein Dämpfungsabschnitt 26 vorgesehen, der in dieser Ausführungsform bandförmig und in seiner Breite schmaler als der erste Kontaktierungsabschnitt 24 ist. Die Kontaktfahne umfasst einen Übergang 28 vom ersten Kontaktierungsabschnitt 24 zum Dämpfungsabschnitt 26, in dem die Breite der Kontaktfahne abnimmt, so dass der Querschnitt der Kontaktfahne um mindestens 50 % abnimmt. Derzweite Kontaktierungsabschnitts 25 ist um 90° umgebogen und ist entsprechend axial sowie senkrecht zum ersten Kontaktierungsabschnitt 24 und zum Dämpfungsabschnitt 26 ausgerichtet. Unmittelbar vor dem gebogenen Übergang zum zweiten Kontaktierungsabschnitt 25 verjüngt der Dämpfungsabschnitt 26 noch weiter.

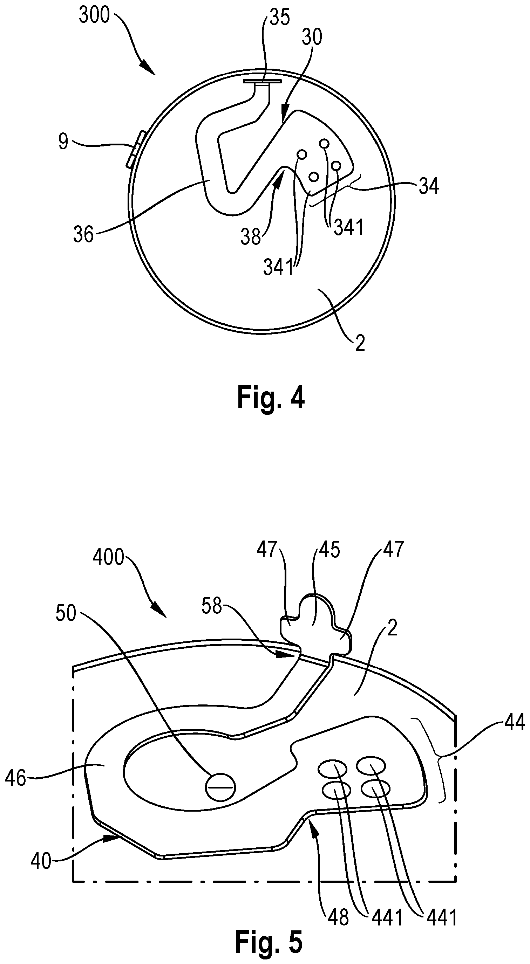

**Fig. 4** zeigt eine weitere, besonders bevorzugte Ausführungsform einer Kontaktfahne 30 gemäß der Erfindung. Neben dem ersten Kontaktierungsabschnitt 34 mit einzelnen Kontaktpunkten bzw. Schweißpunkten 341, welche zur Fixierung der Kontaktfahne 30 an der Stirnseite 2 der Knopfzelle 300 dienen, umfasst die Kontaktfahne 30 auch hier einen um 90° umgebogenen zweiten Kontaktierungsabschnitt 35 zur elektrischen Kontaktierung der Zelle 300 mit einem externen elektrischen Leiter. Zwischen dem ersten Kontaktierungsabschnitt34 und dem zweiten Kontaktierungsabschnitt 35 befindet sich der Dämpfungsabschnitt 36, der in dieser Ausführungsform eine gebogene, bandförmige Form aufweist. Die gebogene Form des Dämpfungsabschnitts 36 ist in dieser Ausgestaltung durch zwei Richtungswechsel im Verlauf des Dämpfungsabschnitts 36 realisiert. Die Kontaktfahne umfasst einen Übergang 38 vom ersten Kontaktierungsabschnitt 34 zum Dämpfungsabschnitt 36, in dem die Breite der Kontaktfahne abnimmt, so dass der Querschnitt der Kontaktfahne um mindestens 50 % abnimmt.

**Fig. 5** zeigt eine weitere, besonders bevorzugte Ausführungsform einer Kontaktfahne 40 mit einem ersten Kontaktierungsabschnitt 44, der über vier Schweißpunkte 441 oder vergleichbare Kontaktpunkte an der Stirnseite 2 der zylindrischen Zelle 400 befestigt ist. Am anderen Ende der Kontaktfahne 40 befindet sich der zweite Kontaktierungsabschnitt 45, über den eine Kontaktierung mit einem externen elektrischen Leiter erfolgen kann. In der in Fig. 5 gezeigten Darstellung ist die Abwinkelung des zweiten Kontaktierungsabschnitts 45 erkennbar. Der zweite Kontaktierungsabschnitt 45 ist dabei etwa in einem rechten Winkel von der Ebene, in der der erste Kontaktierungsabschnitt 44 und der Dämpfungsabschnitt 46 liegen, abgebogen. Die Grenze zwischen dem zweiten Kontaktierungsabschnitt 45 und dem Dämpfungsabschnitt 46 verläuft entlang der Biegelinie 58. Der Dämpfungsabschnitt 46 zeigt einen bandförmigen, gebogenen Verlauf, der etwa 3/4 einer Kreisform ausmacht. Durch diese gebogene Form des Dämpfungsabschnitts 46 wird ein relativ langer Dämpfungsabschnitt 46 bei gleichzeitig wenig Platzerfordernis ausgebildet. Hierdurch können Stöße, Schwingungen oder Vibrationen optimal gedämpft werden.

Zudem erlaubt die gebogene und insbesondere teilkreisförmige Form des Dämpfungsabschnitts 46 die Freilassung bzw. Aussparung eines insbesondere zentralen Bereichs auf der Stirnseite 2 der zylindrischen Zelle 400, die für andere Zwecke genutzt werden kann. In der in Fig. 6 gezeigten Ausgestaltung derzylindrischen Zelle 400 ist insbesondere in diesem zentralen Bereich der Stirnseite 2 ein Sicherheitsventil 50 in Form einer Berstmembran vorgesehen. Durch die gebogene und teilkreisförmige Form des Dämpfungsabschnitts 46 wird das Sicherheitsventil 50 nicht blockiert und auch der gegebenenfalls ablaufende Berstvorgang wird hierdurch nicht gestört.

Der zweite Kontaktierungsabschnitt 45 weist in dieser Ausführungsform zwei seitliche Flügel 47 auf, mit deren Hilfe eine Kontaktierung mit einem externen elektrischen Leiter durch einen Crimp-Prozess bzw. durch einen Klemmvorgang unterstützt werden kann, indem die Flügel 47 um den elektrischen Leiter gebogen werden.

Insgesamt kann mit Hilfe der ersten Kontaktfahne der erfindungsgemäßen zylindrischen Zelle, die sich durch den Dämpfungsabschnitt auszeichnet, im Vergleich mit einer herkömmlichen Kontaktfahne (siehe z.B. Fig. 1 oder 2) die Lebensdauer der Fixierungspunkte des ersten Kontaktierungsabschnitts verlängert werden, indem die diese Fixierungspunkte beeinträchtigenden Stöße, Schwingungen oder Vibrationen abgefangen werden. Gleiches gilt auch im Prinzip für die Verbindungen an dem zweiten Kontaktierungsabschnitt. Der Dämpfungsabschnitt leitet dabei die Stöße, Vibrationen und Schwingungen von den Kontaktierungsabschnitten der Kontaktfahne ab.

Weiterhin ist in den Fig. 3 und 4 jeweils noch der weitere Kontaktierungsabschnitt 9 einer zweiten Kontaktfahne zu erkennen, der den Kontakt von der gegenüberliegenden Stirnseite auf die Ebene der Stirnseite 2 um die äußere Mantelfläche derzylindrischen Zelle herumführt, so dass die Zelle 200 und 300 beispielsweise in besonders einfacher Weise auf einer Platine kontaktiert werden kann.

## Patentansprüche

1. Elektrochemische Zelle (200; 300; 400) mit den Merkmalen
a. Die Zelle umfasst ein einen Innenraum einschließendes zylindrisches Gehäuse mit einer ersten Stirnseite (2) und einerzweiten Stirnseite, die über einen ringförmigen Mantel miteinander verbunden sind, und
b. im Innenraum des Gehäuses ist eine positive Elektrode und eine negative Elektrode angeordnet, und
c. die negative Elektrode ist unmittelbar oder über einen separaten Leiter elektrisch mit der ersten Stirnseite (2) zur Ausbildung eines negativen Pols und die positive Elektrode ist unmittelbar oder über einen separaten Leiter elektrisch mit der zweiten Stirnseite zur Ausbildung eines positiven Pols verbunden, und
d. an der ersten oder der zweiten Stirnseite (2) des Gehäuses ist eine Kontaktfahne (20; 30; 40) fixiert,
sowie den zusätzlichen Merkmalen
e. die Kontaktfahne (20; 30; 40) umfasst einen ersten endständigen Kontaktierungsabschnitt (24; 34; 44), in dem die Kontaktfahne an der Stirnseite (2) fixiert ist, und
f. die Kontaktfahne (20; 30; 40) umfasst einen zweiten endständigen Kontaktierungsabschnitt (25; 35; 45) zur Kontaktierung der elektrochemischen Zelle mit einem externen elektrischen Leiter, und
g. die Kontaktfahne (20; 30; 40) umfasst zwischen dem ersten Kontaktierungsabschnitt (24; 34; 44) und dem zweiten Kontaktierungsabschnitt (24; 34; 44) einen zum freien Schwingen befähigten Dämpfungsabschnitt (26; 36; 46), und
h. der erste Kontaktierungsabschnitt (24; 34; 44) und der Dämpfungsabschnitt (26; 36; 46) erstrecken sich in einer Ebene parallel zur Ebene der Stirnseite (2), an derdie Kontaktfahne fixiert ist, und der zweite Kontaktierungsabschnitt (25; 35; 45) erstreckt sich vorzugsweise in einem Winkel zu dieser Ebene.

2. Zelle nach Anspruch 1 mit dem folgenden zusätzlichen Merkmal:
a. Der Dämpfungsabschnitt (26; 36; 46) ist nicht unmittelbar mit der Stirnseite (2), an der die Kontaktfahne fixiert ist, verbunden.

3. Zelle nach Anspruch 1 oder Anspruch 2 mit mindestens einem der folgenden zusätzlichen Merkmale:
a. Der Dämpfungsabschnitt (26; 36; 46) ist bandförmig ausgestaltet.
b. Der Dämpfungsabschnitt umfasst zumindest einen bandförmigen Abschnitt mit im Wesentlichen konstanter Breite.
c. Die Kontaktfahne umfasst einen Übergang vom ersten Kontaktierungsabschnitt (24; 34; 44) zum Dämpfungsabschnitt (26; 36; 46), in dem die Breite der Kontaktfahne abnimmt, so dass der Querschnitt der Kontaktfahne um mindestens 30 %, bevorzugt um mindestens 50 %, abnimmt.

4. Zelle nach einem der vorhergehenden Ansprüche mit dem folgenden zusätzlichen Merkmal:
a. Der Dämpfungsabschnitt (36; 46) weist einen gebogenen Verlauf, insbesondere einen kreisförmigen Verlauf, auf.

5. Zelle nach einem der vorhergehenden Ansprüche, insbesondere nach Anspruch 4, mit mindestens einem dem folgenden zusätzlichen Merkmale:
a. Die Zelle weist ein Sicherheitsventil (50) auf.
b. Die Zelle (400) weist als Sicherheitsventil ein Berstkreuz auf.
c. Der Dämpfungsabschnitt (36; 46) weist einen gebogenen Verlauf um das Sicherheitsventil herum auf.

6. Zelle nach einem der vorhergehenden Ansprüche mit dem folgenden zusätzlichen Merkmal:
a. Die Kontaktfahne (20; 30; 40) erstreckt sich über den Rand der Stirnseite (2), an der sie fixiert ist.

7. Zelle nach einem der vorhergehenden Ansprüche mit dem folgenden zusätzlichen Merkmal:
a. Die Zelle umfasst die an der ersten oder der zweiten Stirnseite (2) des Gehäuses fixierte Kontaktfahne (20; 30; 40) als erste Kontaktfahne.
b. Die Zelle umfasst eine zweite Kontaktfahne an der Stirnseite des Gehäuses, die der Stirnseite (2) mit der daran fixierten ersten Kontaktfahne (20; 30; 40) gegenüberliegt.

8. Zelle nach Anspruch 7 mit dem folgenden zusätzlichen Merkmal:
a. Die zweite Kontaktfahne (6) erstrecktsich übereinen abgewinkelten Kontaktfahnenbereich (8) in die Ebene der gegenüberliegenden Stirnseite (2).

9. Zelle nach einem der vorhergehenden Ansprüche mit dem folgenden zusätzlichen Merkmal:
a. Die Zelle ist zur Fixierung an einer Platine ausgebildet.

10. Zelle nach einem der vorhergehenden Ansprüche mit mindestens einem der folgenden zusätzlichen Merkmale:
a. Die Kontaktfahne (20; 30; 40) oder die Kontaktfahnen sind Blechteile.
b. Die Kontaktfahne (20; 30; 40) oder die Kontaktfahnen sind Stanzteile.

11. Zelle nach einem der vorhergehenden Ansprüche mit dem folgenden zusätzlichen Merkmal:
a. Die Kontaktfahne (20; 30; 40) oder die Kontaktfahnen weisen eine Dicke in einem Bereich von 0,05 bis 2,5 mm, vorzugsweise 0,25 mm bis 2,5 mm, auf.

12. Zelle nach einem der vorhergehenden Ansprüche mit dem folgenden zusätzlichen Merkmal:
a. Die Kontaktfahne (20; 30; 40) oder die Kontaktfahnen bestehen aus Stahl, insbesondere aus Edelstahl.
b. Die Kontaktfahne (10; 30; 40) oder die Kontaktfahnen bestehen aus Nickel oder vernickelten Metallen oder Nickellegierungen.

13. Zelle nach einem der vorhergehenden Ansprüche mit dem folgenden zusätzlichen Merkmal:
a. Die Zelle ist eine Lithium-Ionen-Zelle.

14. Zelle nach einem der vorhergehenden Ansprüche mit mindestens einem der folgenden zusätzlichen Merkmale:
a. Die Zelle ist eine Knopfzelle.
b. Die Zelle weist einen Durchmesser in einem Bereich von 5 mm bis 25 mm auf.
c. Die Zelle weist eine Höhe in einem Bereich von 1,5 mm bis 15 mm, vorzugsweise von 3 mm bis 15 mm, auf.

## Claims

1. Electrochemical cell (200; 300; 400) having the following features:
a. The cell comprises a cylindrical housing which encloses an interior space, having a first end face (2) and a second end face, which are interconnected by means of an annular shell, and
b. a positive and a negative electrode are arranged in the interior of the housing, and
c. the negative electrode is electrically connected, either directly or via a separate conductor, to the first end face (2), to constitute a negative pole, and the positive electrode is electrically connected, either directly or via a separate conductor, to the second end face, to constitute a positive pole, and
d. a contact lug (20; 30; 40) is fastened to the first or second end face (2) of the housing,
and the following additional features
e. the contact lug (20; 30; 40) comprises a first end-mounted contact-connection section (24; 34; 44), at which the contact lug is fastened to the end face (2), and
f. the contact lug (20; 30; 40) comprises a second end-mounted contact-connection section (25; 35; 45) for the contact-connection of the electrochemical cell with an external electrical conductor, and
g. the contact lug (20; 30; 40), between the first contact-connection section (24; 34; 44) and the second contact-connection section (24; 34; 44), comprises a damping section (26; 36; 46) which is capable of free oscillation, and
h. the first contact-connection section (24; 34; 44) and the damping section (26; 36; 46) extend in a parallel plane to the plane of the end face (2) to which the contact lug is fastened, and the second contact-connection section (25; 35; 45) preferably extends at an angle to said plane.

2. Cell according to Claim 1, having the following additional feature:
a. The damping section (26; 36; 46) is not directly connected to the end face (2) to which the contact lug is fastened.

3. Cell according to Claim 1 or Claim 2, having at least one of the following additional features:
a. The damping section (26; 36; 46) is configured with a strip shape.
b. The damping section comprises at least one strip-shaped section with an essentially constant width.
c. The contact lug incorporates a transition from the first contact-connection section (24; 34; 44) to the damping section (26; 36; 46), in which the width of the contact lug decreases, such that the cross-section of the contact lug is reduced by at least 30%, and preferably by at least 50%.

4. Cell according to one of the preceding claims, having the following additional feature:
a. The damping section (36; 46) assumes a curved profile, particularly a circular profile.

5. Cell according to one of the preceding claims, particularly according to Claim 4, having at least one of the following additional features:
a. The cell comprises a safety valve (50).
b. The cell (400) comprises a safety valve in the form of a rupture cross.
c. The damping section (36; 46) assumes a curved profile around the safety valve.

6. Cell according to one of the preceding claims, having the following additional feature:
a. The contact lug (20; 30; 40) extends beyond the edge of the end face (2), to which it is fastened .

7. Cell according to one of the preceding claims, having the following additional features:
a. The cell comprises the contact lug (20; 30; 40) which is fastened to the first or second end face (2) of the housing, as a first contact lug.
b. The cell comprises a second contact lug on the end face of the housing which is arranged opposite the end face (2) to which the first contact lug (20; 30; 40) is fastened.

8. Cell according to Claim 7, having the following additional feature:
a. The second contact lug (6) extends over an angled contact lug region (8) in the plane of the opposing end face (2).

9. Cell according to one of the preceding claims, having the following additional feature:
a. The cell is configured for fastening to a circuit board.

10. Cell according to one of the preceding claims, having at least one of the following additional features:
a. The contact lug (20; 30; 40) or contact lugs are sheet metal parts.
b. The contact lug (20; 30; 40) or contact lugs are stamped parts.

11. Cell according to one of the preceding claims, having the following additional feature:
a. The contact lug (20; 30; 40) or contact lugs have a thickness within a range of 0.05 to 2.5 mm, preferably of 0.25 mm to 2.5 mm.

12. Cell according to one of the preceding claims, having the following additional features:
a. The contact lug (20; 30; 40) or contact lugs are comprised of steel, particularly of special steel.
b. The contact lug (10; 30; 40) or contact lugs are comprised of nickel or nickel-plated metals, or of nickel alloys.

13. Cell according to one of the preceding claims, having the following additional feature:
a. The cell is a lithium-ion cell.

14. Cell according to one of the preceding claims, having at least one of the following additional features:
a. The cell is a button cell.
b. The cell has a diameter within a range of 5 mm to 25 mm.
c. The cell has a height within a range of 1.5 mm to 15 mm, preferably of 3 mm to 15 mm.

## Revendications

1. Cellule électrochimique (200 ; 300 ; 400) présentant les caractéristiques suivantes :
a. la cellule comprend un carter cylindrique incluant un espace intérieur, avec un premier côté avant (2) et un deuxième côté avant reliés entre eux via une enveloppe de forme annulaire ; et
b. une électrode positive et une électrode négative sont disposées dans l'espace intérieur du carter ; et
c. l'électrode négative est reliée électriquement au premier côté avant (2) soit directement soit via un conducteur séparé de façon à former un pôle négatif et l'électrode positive est reliée électriquement au deuxième côté avant soit directement soit via un conducteur séparé de façon à former un pôle positif ; et
d. une languette de contact (20 ; 30 ; 40) est fixée au niveau du premier ou du deuxième côté avant (2) du carter ;
ainsi que les caractéristiques supplémentaires suivantes :
e. la languette de contact (20 ; 30 ; 40) comprend une première section de mise en contact terminale (24 ; 34 ; 44) dans laquelle la languette de contact est fixée au côté avant (2) ; et
f. la languette de contact (20 ; 30 ; 40) comprend une deuxième section de mise en contact terminale (25 ; 35 ; 45) servant à la mise en contact de la cellule électrochimique avec un conducteur électrique externe ; et
g. la languette de contact (20 ; 30 ; 40) comprend une section d'amortissement (26 ; 36 ; 46) capable d'osciller librement entre la première section de mise en contact (24 ; 34 ; 44) et la deuxième section de mise en contact (24 ; 34 ; 44) ; et
h. la première section de mise en contact (24 ; 34 ; 44) et la section d'amortissement (26 ; 36 ; 46) s'étendent dans un plan parallèle au plan du côté avant (2) au niveau duquel la languette de contact est fixée et la deuxième section de mise en contact (25 ; 35 ; 45) s'étend de préférence selon un certain angle par rapport à ce plan.

2. Cellule selon la revendication 1, avec la caractéristique supplémentaire suivante :
a. la section d'amortissement (26 ; 36 ; 46) n'est pas directement reliée au côté avant (2) au niveau duquel la languette de contact est fixée.

3. Cellule selon la revendication 1 ou 2, avec au moins l'une quelconque des caractéristiques supplémentaires suivantes :
a. la section d'amortissement (26 ; 36 ; 46) est réalisée en forme de bande ;
b. la section d'amortissement comprend au moins une section en forme de bande avec une largeur pour l'essentiel constante ;
c. la languette de contact comprend une transition depuis la première section de mise en contact (24 ; 34 ; 44) jusqu'à la section d'amortissement (26 ; 36 ; 46) dans laquelle la largeur de la languette de contact décroît, de sorte que la section transversale de la languette de contact décroisse d'au moins 30 %, de façon préférée d'au moins 50 %.

4. Cellule selon l'une quelconque des revendications précédentes, avec la caractéristique supplémentaire suivante :
a. la section d'amortissement (36 ; 46) présente une trajectoire incurvée, notamment une trajectoire de forme circulaire.

5. Cellule selon l'une quelconque des revendications précédentes, notamment selon la revendication 4, avec au moins l'une quelconque des caractéristiques supplémentaires suivantes :
a. la cellule comporte une soupape de sécurité (50) ;
b. la cellule (400) comporte une croix de rupture prenant la forme d'une soupape de sécurité ;
c. la section d'amortissement (36 ; 46) présente une trajectoire incurvée autour de la soupape de sécurité.

6. Cellule selon l'une quelconque des revendications précédentes, avec la caractéristique supplémentaire suivante :
a. la languette de contact (20 ; 30 ; 40) s'étend au-delà du bord du côté avant (2) auquel elle est fixée.

7. Cellule selon l'une quelconque des revendications précédentes, avec la caractéristique supplémentaire suivante :
a. la cellule comprend la languette de contact (20 ; 30 ; 40) servant de première languette de contact qui est fixée au niveau du premier ou du deuxième côté avant (2) du carter ;
b. la cellule comprend une deuxième languette de contact au niveau du côté avant du carter qui est opposé au côté avant (2) comportant la première languette de contact (20 ; 30 ; 40) y étant fixée.

8. Cellule selon la revendication 7, avec la caractéristique supplémentaire suivante :
a. la deuxième languette de contact (6) s'étend dans le plan du côté opposé avant (2) via une zone coudée de languette de contact (8).

9. Cellule selon l'une quelconque des revendications précédentes, avec la caractéristique supplémentaire suivante :
a. la cellule est réalisée pour permettre une fixation à une platine.

10. Cellule selon l'une quelconque des revendications précédentes, avec au moins l'une quelconque des caractéristiques supplémentaires suivantes :
a. la languette de contact (20 ; 30 ; 40) ou les languettes de contact sont des pièces en tôle ;
b. la languette de contact (20 ; 30 ; 40) ou les languettes de contact sont des pièces estampées.

11. Cellule selon l'une quelconque des revendications précédentes, avec la caractéristique supplémentaire suivante :
a. la languette de contact (20 ; 30 ; 40) ou les languettes de contact présentent une épaisseur comprise dans une plage allant de 0,05 à 2,5 mm, de préférence de 0,25 mm à 2,5 mm.

12. Cellule selon l'une quelconque des revendications précédentes, avec la caractéristique supplémentaire suivante :
a. la languette de contact (20 ; 30 ; 40) ou les languettes de contact sont réalisées à partir d'acier, notamment d'inox ;
b. la languette de contact (10 ; 30 ; 40) ou les languettes de contact sont réalisées à partir de nickel ou de métaux nickelés ou d'alliages de nickel.

13. Cellule selon l'une quelconque des revendications précédentes, avec la caractéristique supplémentaire suivante :
a. la cellule est une cellule lithium-ions.

14. Cellule selon l'une quelconque des revendications précédentes, avec au moins l'une quelconque des caractéristiques supplémentaires suivantes :
a. la cellule est une pile-bouton ;
b. la cellule présente un diamètre situé dans une plage allant de 5 mm à 25 mm ;
c. la cellule présente une hauteur située dans une plage allant de 1,5 mm à 15 mm, de préférence de 3 mm à 15 mm.
